# EUROPEAN PATENT APPLICATION

(11) **EP 4 234 220 A1**
(43) Date of publication of application: **30.08.2023**
(21) Application number: 21894363.7
(22) Date of filing: 08.10.2021
(51) Int. Cl.: B29D 30/30, B60C 11/00

(54) **TIRE AND MANUFACTURING METHOD FOR SAME**

(30) Priority: 19.11.2020 JP 2020192189
(71) Applicant: Sumitomo Rubber Industries, Ltd., Kobe-shi, Hyogo 651-0072 (JP)
(72) Inventor: YOKOTA, Masaya, Kobe-shi, Hyogo 651-0072 (JP); KAWASAKO, Yoshitaka, Kobe-shi, Hyogo 651-0072 (JP)
(74) Representative: Manitz Finsterwald Patent- und Rechtsanwaltspartnerschaft mbB
(86) International application number: PCT/JP2021/037450
(87) International publication number: WO 2022/107489

(57) **Abstract**

A manufacturing method includes the steps of: (A) preparing first and second sheet pieces 20a and 20b made of unvulcanized rubber; and (B) winding a long sheet 26 on a drum 6. The long sheet 26 includes the first and second sheet pieces 20a and 20b, and the second sheet piece 20b has a front edge joined to a rear edge of the first sheet piece 20a. Preferably, the step (B) includes the steps of: (B' 1) joining the front edge of the second sheet piece 20b to the rear edge of the first sheet piece 20a to obtain the long sheet 26; and (B'2) feeding the sheet 26 from a servicer 4 to the drum 6 while rotating the drum 6 to wind the sheet 26 on the drum 6.

## Description

### Technical Field

The present disclosure relates to a tire and a method of manufacturing the tire.

### Background Art

In tire manufacturing, a sheet made of an unvulcanized rubber composition is used. In sheet manufacturing, first, base rubber, a filler, and other ingredients are kneaded, and the kneaded mixture was rolled to obtain a strip-shaped primary sheet. The primary sheet is cut to a desired size, and thus a sheet is formed. For example, a primary sheet is formed from base rubber for tread formation, a filler, and other ingredients, and the primary sheet is cut to a length equal to the outer circumferential length of the tire. In this manner, a sheet for tread formation is obtained. This sheet is placed and stored on a given tray.

In the molding step, a sheet is placed on a servicer and fed from the servicer to a drum. The sheet is wound on the outer circumference of the drum to form a component of the tire. For example, a sheet for tread formation is wound one turn on the drum to form a tread. A study on a servicer that feeds a sheet to a drum is disclosed in Japanese Laid-Open Patent Application Publication No. 2012-111078.

### Citation List

### Patent Literature

PTL 1: Japanese Laid-Open Patent Application Publication No. 2012-111078

### Summary of Invention

### Technical Problem

A tire with a large outer diameter is large in outer circumference length, and thus the sheet for tread formation is also long. Such a long sheet is not easy to form with accuracy, and the manufacturing and storage of the sheet require a dedicated installation. Thus, manufacturing of a tire with a large outer diameter generally employs a method in which an uncut primary sheet is wound and stored on a reel and in which the primary sheet is cut after being drawn from the reel and wound one turn on a drum. However, in this method, the primary sheet could deform under its own weight during storage on the reel, and the deformation could cause weight variation from region to region of the primary sheet. This could affect the uniformity of the tire.

The present inventors aim to provide a method capable of manufacturing a tire with excellent uniformity.

### Solution to Problem

A tire manufacturing method of the present invention includes the steps of:
(A) preparing first and second sheet pieces made of unvulcanized rubber; and
(B) winding a long sheet on a drum, the long sheet including the first and second sheet pieces, wherein the second sheet piece has a front edge joined to a rear edge of the first sheet piece.

### Advantageous Effects of Invention

In the tire manufacturing method, the first and second sheet pieces are prepared. The sheet, which includes the first and second sheet pieces and in which the front edge of the second sheet piece is joined to the rear edge of the first sheet piece, is wound on the drum. In this method, the length of each of the first and second sheet pieces can be reduced even in the case of manufacturing a tire with a large outer diameter. In this manufacturing method, there is no need to store a primary sheet on a reel even in the case of manufacturing a tire with a large outer diameter. This method is capable of manufacturing a tire with excellent uniformity.

### Brief Description of Drawings

FIG. 1 is a plan view showing a manufacturing apparatus used in a tire manufacturing method according to one embodiment.
FIG. 2 is a side view of the apparatus of FIG. 1.
FIG. 3A is an enlarged view showing first and second sheet pieces placed in the apparatus of FIG. 2, and FIG. 3B is an enlarged view showing the first and second sheet pieces which are being subjected to pressure bonding in the apparatus of FIG. 2.
FIG. 4 is a side view showing a sheet which is being wound on a drum in the apparatus of FIG. 2.
FIG. 5 is a cross-sectional view showing a tire manufactured by a tire manufacturing method according to one embodiment.
FIG. 6 is a cross-sectional view showing the entirety of the tire of FIG. 5 cut at the equator of the tire.

### Description of Embodiments

The following will describe in detail preferred embodiments with appropriate reference to the drawings.

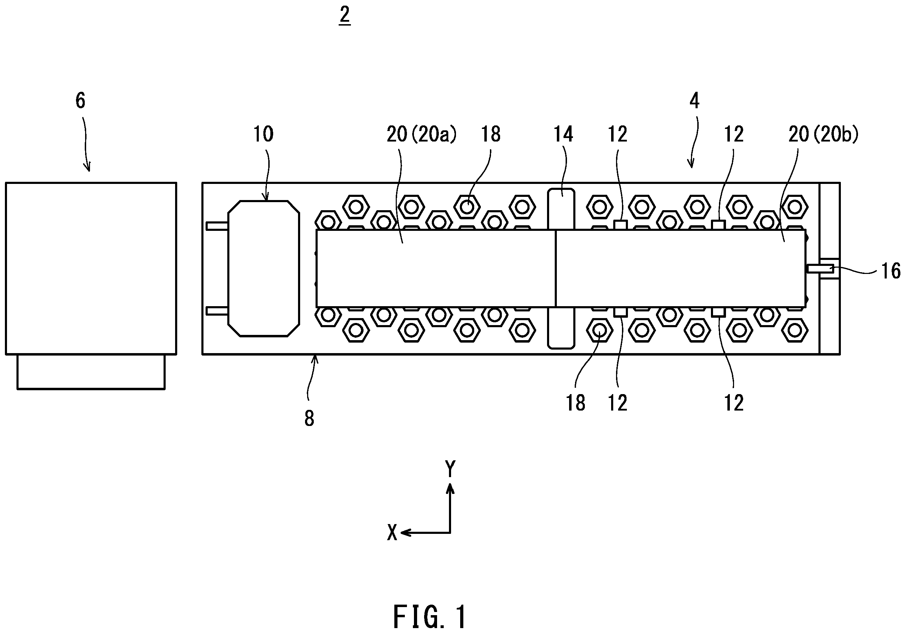

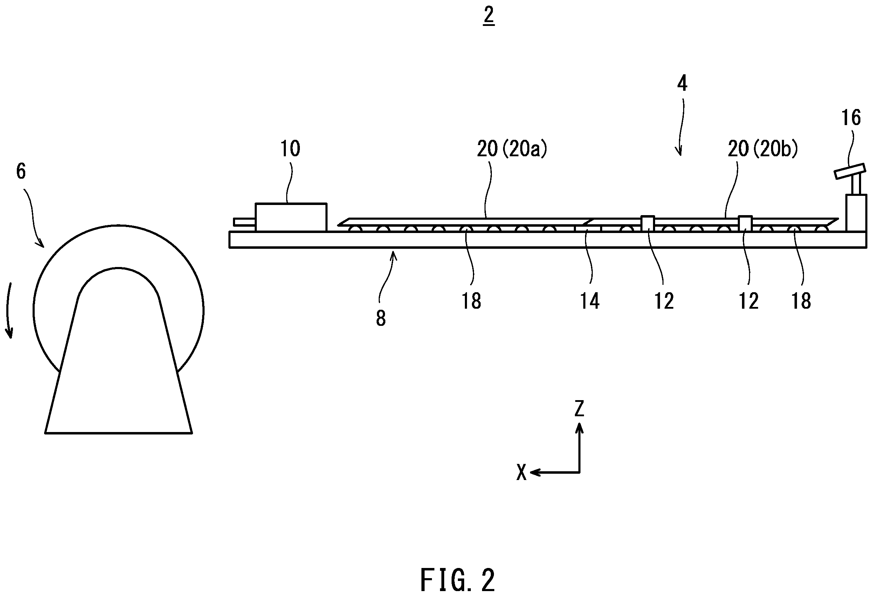

FIG. 1 is a plan view showing a tire manufacturing apparatus 2 used in a tire manufacturing method according to one embodiment. FIG. 2 is a side view of the apparatus 2. In FIGS. 1 and 2, the direction indicated by the arrow X is the forward direction, and the opposite direction is the rearward direction. The direction indicated by the arrow Y is the rightward direction, and the opposite direction is the leftward direction. The direction indicated by the arrow Z is the upward direction, and the opposite direction is the downward direction. The apparatus 2 includes a servicer 4 and a drum 6.

The servicer 4 feeds a sheet made of unvulcanized rubber to the drum 6. The servicer 4 includes a placement base 8, a first guide 10, a second guide 12, a support base 14, and a laser 16. As described later, the servicer 4 further includes a pressing roller used during formation of a sheet and a driver that feeds the sheet forward.

As shown in FIG. 1, the placement base 8 is rectangular in plan. As shown in FIGS. 1 and 2, a plurality of rollers 18 are disposed on the upper surface of the placement base 8. As shown in FIGS. 1 and 2, sheet pieces 20 are placed on the placement base 8 in tire manufacturing. In this embodiment, two sheet pieces 20, i.e., first and second sheet pieces 20a and 20b, are placed on the placement base 8. The plurality of rollers 18 of the placement base 8 support the first and second sheet pieces 20a and 20b. The first and second sheet pieces 20a and 20b are made of an unvulcanized rubber composition. In this embodiment, the first and second sheet pieces 20a and 20b are for tread formation.

The first guide 10 is located ahead of the placement base 8. The location of the first sheet piece 20a in the width direction (left-right direction) is fixed by the first guide 10.

The second guide 12 is located on the placement base 8. In this embodiment, as shown in FIG. 1, two pairs of second guides 12 spaced from each other in the width direction are located on the placement base 8. Each second guide 12 is movable in the left-right direction. Thus, the locations of the second guides 12 in the width direction are adjustable. In this embodiment, the second guides 12 are located behind the center of the placement base 8 in the front-rear direction. In this embodiment, the location of the second sheet piece 20b in the width direction is fixed by the second guides 12.

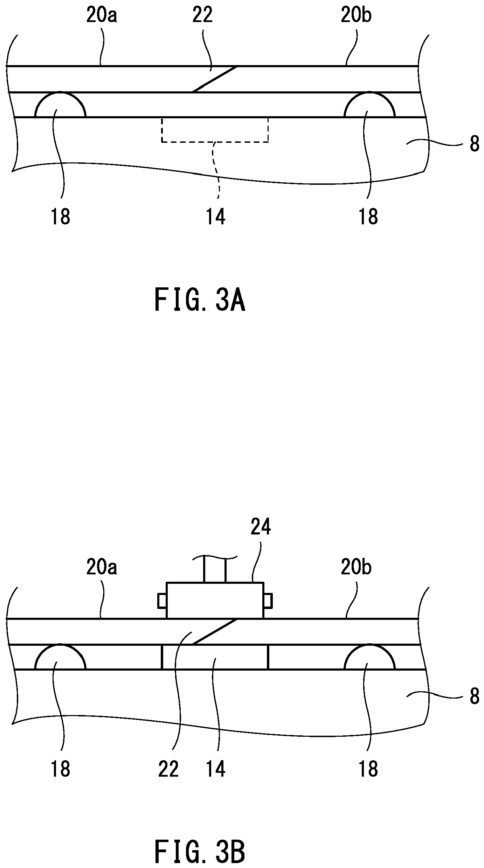

As shown in FIG. 1, the support base 14 is located around the center of the placement base 8 in the front-rear direction. The support base 14 extends in the left-right direction. In this embodiment, the support base 14 is plate-shaped. The support base 14 is raisable and lowerable. FIGS. 3A and 3B are enlarged side views showing the vicinity of the support base 14. The support base 14 in a lowered state is shown in FIG. 3A. In this state, the support base 14 is embedded in a recess of the upper surface of the placement base 8. The support base 14 in a raised state is shown in FIG. 3B. In this state, the support base 14 is in contact with the lower surface of the first sheet piece 20a.

The laser 16 is located at the rear edge of the placement base 8. The laser 16 can emit a laser beam from a point above the rear edge of the placement base 8 toward the first and second sheet pieces 20a and 20b. The laser beam is a guide indicating a point with which the centers of the first and second sheet pieces 20a and 20b in the width direction should be aligned. Although not shown, the first and second sheet pieces 20a and 20b are provided with marks indicating their centers in the width direction. The locations of the first and second sheet pieces 20a and 20b in the width direction can be checked by comparing the location of the laser-irradiated point and the locations of the marks.

The drum 6 is located ahead of the servicer 4. The drum 6 is in the shape of a cylindrical tube. The drum 6 is rotatable in the direction indicated by an arrow in FIG. 2.

A tire manufacturing method of a first embodiment uses the apparatus 2 described above. This method includes the steps of:
(1) preparing the first and second sheet pieces 20a and 20b;
(2) arranging the first and second sheet pieces 20a and 20b on the placement base 8;
(3) joining the first and second sheet pieces 20a and 20b to obtain a sheet;
(4) winding the sheet on the drum 6;
(5) obtaining a raw cover; and
(6) vulcanizing the raw cover to obtain a tire.

In the step (1), ingredients such as base rubber and a filler of the first and second sheet pieces 20a and 20b are kneaded to obtain a rubber composition. The rubber composition is rolled to obtain a strip-shaped primary sheet. The primary sheet is cut into pieces of a desired length, and thus the first and second sheet pieces 20a and 20b are obtained. These sheet pieces 20 are stored on a tray.

In the step (2), the first and second sheet pieces 20a and 20b are arranged on the placement base 8. The first sheet piece 20a is placed on the front side of the placement base 8, and the second sheet piece 20b is placed behind the first sheet piece 20a. The location of the first sheet piece 20a in the width direction is fixed by the first guide 10. The location of the second sheet piece 20b in the width direction is fixed by the second guides 12. The second guides 12 guide the second sheet piece 20b such that the center of the second sheet piece 20b in the width direction coincides with the center of the first sheet in the width direction. Furthermore, the first and second sheet pieces 20a and 20b are placed such that their centers in the width direction are aligned with the laser-irradiated point.

FIG. 3A shows the arranged first and second sheet pieces 20a and 20b. As shown in this figure, the rear edge of the first sheet piece 20a and the front edge of the second sheet piece 20b overlap each other. The overlap portion is referred to as a "joint 22". At this stage, the upper surface of the support base 14 is located at the same level as the upper surface of the placement base 8. The support base 14 is not located above the upper surface of the placement base 8. As shown in FIG. 3A, the joint 22 is located directly above the support base 14. In other words, the locations of the first and second sheet pieces 20a and 20b in the front-rear direction are fixed such that the joint 22 is located directly above the support base 14.

In the step (3), the support base 14 ascends and comes into contact with the lower surface of the joint 22. FIG. 3B shows the support base 14 in contact with the lower surface of the joint 22. As shown in FIG. 3B, the pressing roller 24 presses against the upper surface of the joint 22 and moves from one edge to the other of the joint 22 in the width direction. The joint 22 is sandwiched between the pressing roller 24 and the support base 14. Thus, the first and second sheet pieces 20a and 20b are subjected to pressure bonding. The first sheet piece 20a is joined to the second sheet piece 20b. As a result, a long sheet is obtained. The pressing roller 24 and the support base 14 constitute a pressure bonding mechanism by which the first and second sheet pieces 20a and 20b are pressure-bonded. The support base 14 descends upon completion of joining of the first and second sheet pieces 20a and 20b. Thus, the support base 14 moves away from the joint 22. The support base 14 returns to the position shown in FIG. 3A.

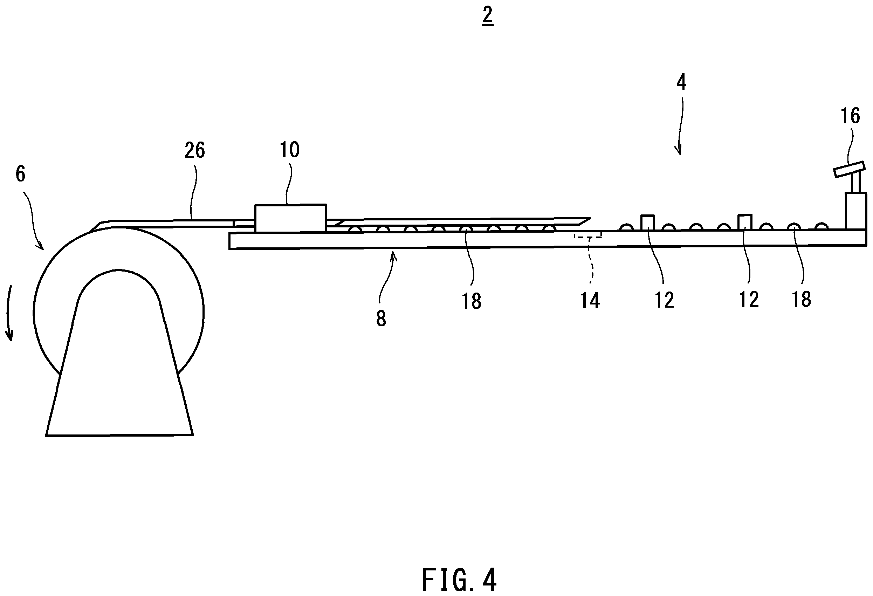

In the step (4), the sheet 26 is fed forward by a driver which is not shown, and the front edge of the sheet 26 is placed on the outer circumferential surface of the drum 6. This state is shown in FIG. 4. The sheet 26 is fed further forward, and simultaneously the drum 6 rotates in the direction indicated by the arrow of FIG. 4. Thus, the sheet 26 is wound around the drum 6. As a result, a tire component is formed. In this embodiment, an unvulcanized tread is formed. In this embodiment, the unvulcanized tread is composed of a first unvulcanized tread formed from the first sheet piece 20a and a second unvulcanized tread formed from the second sheet piece 20b.

In the step (5), the component formed on the drum 6 is combined with other tire components to form a raw cover. In the step (6), the raw cover is placed into a mold. The raw cover is heated and pressurized in the mold. The rubber composition undergoes a crosslinking reaction, in consequence of which a tire is obtained. In this embodiment, a first tread is obtained from the first unvulcanized tread, and a second tread is obtained from the second unvulcanized tread. In this embodiment, the obtained tire includes the first and second treads.

In the embodiment described above, the two sheet pieces 20, i.e., the first and second sheet pieces 20a and 20b, are joined together on the servicer 4 to obtain the sheet 26. That is, the sheet 26 consists of two divided pieces. The sheet 26 may consist of three divided sheet pieces, i.e., the first, second, and third sheet pieces, which may be joined together on the servicer. In this case, the rear edge of the first sheet piece is joined to the front edge of the second sheet piece, and the rear edge of the second sheet piece is joined to the front edge of the third sheet piece. The sheet may consist of four or more divided sheet pieces, which may be joined together on the servicer.

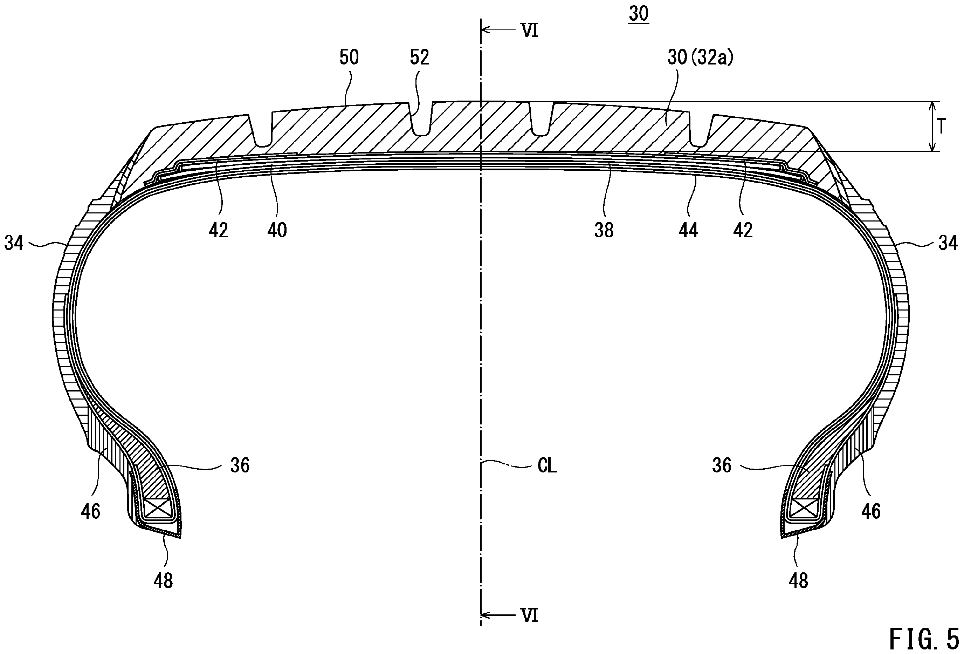

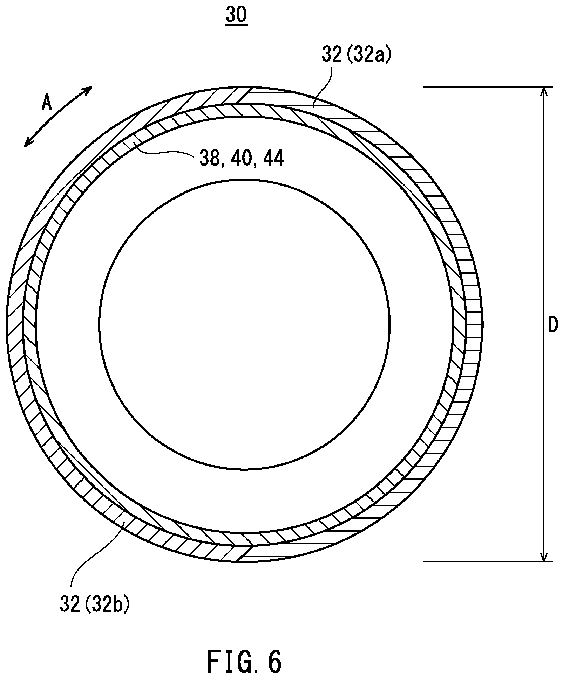

FIG. 5 is a cross-sectional view showing an example of a tire 30 obtained by the manufacturing method described above. In FIG. 5, the up-down direction is the radial direction of the tire 30, the left-right direction is the axial direction of the tire 30, and the direction perpendicular to the plane of the figure is the circumferential direction of the tire 30. FIG. 5 shows a cross-section of the tire 30 that is perpendicular to the circumferential direction. The dashed-two dotted line CL represents the equator plane. FIG. 6 is a cross-sectional view taken along the line VI-VI of FIG. 5. FIG. 6 is a cross-sectional view of the tire 30 of FIG. 5 taken along the equator plane CL. In FIG. 6, the double-headed arrow A represents the circumferential direction of the tire 30. In the cross-sectional view of FIG. 6, the tire 30 is shown in its entirety.

As shown in FIGS. 5 and 6, the tire 30 includes a first tread 32a, a second tread 32b, a pair of sidewalls 34, a pair of beads 36, a carcass 38, a belt 40, a pair of sidebands 42, an inner liner 44, a pair of clinches 46, and a pair of chafers 48. In the cross-sectional view of FIG. 6, the carcass 38, belt 40, and inner liner 44 are simplistically depicted. The carcass 38, belt 40, and inner liner 44 are collectively shown on one cross-section.

The first tread 32a includes, as its outer surface, a tread surface 50 which makes contact with the road surface. As shown in FIG. 6, the first tread 32a extends in the circumferential direction. The tread surface 50 of the first tread 32a is provided with grooves 52. The grooves 52 form a tread pattern. In this embodiment, the shape of the first tread 32a is symmetrical about the equator plane CL, except for the tread pattern. The first tread 32a is made of cross-linked rubber excellent in terms of wear resistance, heat resistance, and grip performance.

The second tread 32b includes, as its outer surface, a tread surface which makes contact with the road surface. As shown in FIG. 6, the second tread 32b is continuous with the first tread 32a and extends in the circumferential direction. Each of the two circumferential ends of the second tread 32b is joined to a corresponding one of the two circumferential ends of the first tread 32a. The tread surface of the second tread 32b is provided with grooves. The grooves form a tread pattern. In this embodiment, the shape of the second tread 32b is symmetrical about the equator plane CL, except for the tread pattern. The second tread 32b is made of cross-linked rubber excellent in terms of wear resistance, heat resistance, and grip performance.

In this embodiment, the materials of the first and second treads 32a and 32b are the same. The first and second treads 32a and 32b are made of the same rubber composition. The materials of the first and second treads 32a and 32b may be different.

In this embodiment, the thicknesses of the first and second treads 32a and 32b are equal. In this specification, the thicknesses of the first and second treads 32a and 32b are not distinguished from each other but collectively referred to as "thickness of the tread". In this specification, both the first and second treads 32a and 32b may be referred to as "tread 32" where there is no need to distinguish the first and second treads 32a and 32b from each other.

In FIG. 6, the double-headed arrow D represents the outer diameter of the tire 30. The double-headed arrow D is the outer diameter of the tread 32 as well. In the tire 30, the outer diameter D is 740 mm or more.

Hereinafter, the advantageous effects of the present embodiment will be described.

In the tire manufacturing method of the present embodiment, the first and second sheet pieces 20a and 20b are prepared. These sheet pieces are joined together on the servicer 4 to form the sheet 26. In this method, since the sheet 26 is prepared as the first and second sheet pieces 20a and 20b divided from each other, the length of each of the first and second sheet pieces 20a and 20b can be reduced even in the case of manufacturing a tire with a large outer diameter. In this manufacturing method, there is no need to store a primary sheet on a reel and feed the primary sheet from the reel to the drum 6 even in the case of manufacturing a tire with a large outer diameter. In this manufacturing method, the first and second sheet pieces 20a and 20b are prevented from deforming under their own weight during storage even in the case of manufacturing a tire with a large outer diameter. This manufacturing method is capable of manufacturing a tire with excellent uniformity.

In this embodiment, when the first and second sheet pieces 20a and 20b are joined, the support base 14 comes into contact with the joint 22, and the pressing roller 24 presses against the upper surface of the joint 22. Thus, the first and second sheet pieces 20a and 20b can be pressure-bonded firmly.

In this embodiment, the support base 14 descends and moves away from the joint 22 after joining of the first and second sheet pieces 20a and 20b. Thus, when the sheet 26 is fed to the drum 6, the sheet 26 is prevented from deforming due to the joint 22 remaining in close contact with the support base 14 after formation of the sheet 26.

In this embodiment, the second guides 12 which are movable in the width direction are disposed on the placement base 8. Adjusting the locations of the second guides 12 in the width direction makes it possible to place the first and second sheet pieces 20a and 20b at appropriate locations even in the case where tires with different sizes are to be formed.

In this embodiment, the second guides 12 are located behind the center of the placement base 8 in the front-rear direction and serve to fix the location of the second sheet piece 20b. The second guides 12 prevent the second sheet piece 20b from being tilted relative to the first sheet piece 20a.

In this manufacturing method, as stated above, the sheet pieces are prevented from deforming under their own weight during storage even in the case where the tire 30 has a large outer diameter. With this manufacturing method, even a tire with an outer diameter D of 740 mm or more can have excellent uniformity. This manufacturing method is suitable particularly for manufacturing of a tire with an outer diameter D of 740 mm or more.

In view of the fact that excellent uniformity can be achieved even when the outer diameter D is large, the outer diameter D of the tire 30 obtained by the manufacturing method may be 770 mm or more and may be 800 mm or more.

The hardness H1 of the first tread 32a obtained by the tire manufacturing method is preferably 60 or less. The tire manufacturing method eliminates the need to store the first sheet piece 20a on a reel. The first sheet piece 20a is prevented from deforming under its own weight during storage. The manufacturing method allows for reducing the hardness H1 of the first tread 32a while ensuring excellent uniformity. The first tread 32a with a low hardness H1 has excellent grip performance. From this viewpoint, the hardness H1 of the first tread 32a obtained by the manufacturing method is preferably 55 or less and more preferably 50 or less.

The hardness H2 of the second tread 32b obtained by the tire manufacturing method is preferably 60 or less. The tire manufacturing method eliminates the need to store the second sheet piece 20b on a reel. The tire manufacturing method allows for reducing the hardness H2 of the second tread 32b while ensuring excellent uniformity. The second tread 32a with a low hardness H2 has excellent grip performance. From this viewpoint, the hardness H2 of the second tread 32b obtained by the manufacturing method is preferably 55 or less and more preferably 50 or less.

The hardness H1 and hardness H2 of the first and second treads 32a and 32b obtained by the tire manufacturing method are equal. The hardness H1 and hardness H2 may be different.

The hardness H1 and hardness H2 of the first and second treads 32a and 32b are measured according to "JIS K 6253" and using a type A durometer. The durometer is pressed against the cross-section as shown in FIG. 5 to measure the hardness. The measurement is conducted at a temperature of 23°C.

In FIG. 5, the double-headed arrow T represents the thickness of the tread 32. The thickness T is the thickness of the first tread 32a and the thickness of the second tread 32b as well. The thickness T of the tread 32 is measured at the center of the tread 32 in the axial direction. In this embodiment, the thickness T is measured at the equator.

The thickness T of the tread 32 obtained by the tire manufacturing method is preferably 10 mm or more. The tire manufacturing method eliminates the need to store the first and second sheet pieces 20a and 20b on reels. The first sheet piece 20a or second sheet piece 20b is prevented from deforming under its own weight during storage even when the thickness T is large. The manufacturing method allows for increasing the thickness T of the tread 32 while ensuring excellent uniformity. The tread 32 with a large thickness T has excellent durability. From this viewpoint, the thickness T of the tread 32 obtained by the tire manufacturing method is preferably 13 mm or more and more preferably 16 mm or more.

The outer diameter D of the tire 30 of this embodiment is 740 mm or more. The tire 30 includes the first tread 32a extending in the circumferential direction and the second tread 32b continuous with the first tread 32a and extending in the circumferential direction. As previously stated, there is no need to store the first and second sheet pieces 20a and 20b on reels in the manufacturing of the tire 30. The first and second sheet pieces 20a and 20b are prevented from deforming under their own weight during storage even when the tire 30 has a large outer diameter D. In the tire 30, excellent uniformity is achieved while the outer diameter D is 740 mm or more.

In view of the fact that excellent uniformity can be achieved even in the tire 30 with a large outer diameter D, the outer diameter D of the tire 30 may be 770 mm or more and may be 800 mm or more.

In the tire 30, the hardness H1 of the first tread 32a is preferably 60 or less. As previously stated, the first sheet piece 20a is prevented from deforming under its own weight in the manufacturing of the tire 30. In the tire 30, the hardness H1 of the first tread 32a can be reduced while excellent uniformity is ensured. The first tread 32a with a low hardness H1 has excellent grip performance. From this viewpoint, the hardness H1 is preferably 55 or less and more preferably 50 or less. In view of achieving excellent running stability, the hardness H1 is preferably 40 or more.

In the tire 30, the hardness H2 of the second tread 32b is preferably 60 or less. As previously stated, the second sheet piece 20b is prevented from deforming under its own weight in the manufacturing of the tire 30. In the tire 30, the hardness H2 of the second tread 32b can be reduced while excellent uniformity is ensured. The second tread 32b with a low hardness H2 has excellent grip performance. From this viewpoint, the hardness H2 is preferably 55 or less and more preferably 50 or less. In view of achieving excellent running stability, the hardness H2 is preferably 40 or more.

In the tire 30, the thickness T is preferably 10 mm or more. In the tire 30, as previously stated, the first sheet piece 20a or second sheet piece 20b is prevented from deforming under its own weight during storage even when the thickness T is large. In the tire 30, the thickness T of the tread 32 can be increased while excellent uniformity is ensured. The tread 32 with a large thickness T has excellent durability. From this viewpoint, the thickness T is preferably 13 mm or more and more preferably 16 mm or more.

In this specification, a component forming a part of the tread of the tire 30 is referred to as a "tread piece". The first and second treads 32a and 32b are tread pieces. In the embodiment described above, the tread of the tire 30 is composed of the first and second treads 32a and 32b. That is, in the above embodiment, the tread of the tire 30 is composed of two tread pieces. The tire may include a first tread extending in the circumferential direction, a second tread continuous with the first tread and extending in the circumferential direction, and a third tread continuous with the second tread and extending in the circumferential direction. That is, the tread may be composed of three tread pieces. The tread may be composed of four or more tread pieces.

The number of the tread pieces included in the tire is preferably two. For the tire in which the number of the tread pieces is two, the number of sheet pieces required for formation of the tread is two. When the number of sheet pieces is two, the tire is easier to manufacture than a tire that requires a lager number of sheet pieces for tread formation. The tire can be efficiently manufactured.

The dimensions and angles of the components of the tire 30 are measured for the tire 30 mounted on a normal rim and inflated with air to a normal internal pressure, unless otherwise specified. During the measurement, no load is applied to the tire 12. In the description herein, the normal rim represents a rim that is specified according to the standards with which the tire 12 complies. The "standard rim" in the JATMA standards, the "design rim" in the TRA standards, and the "measuring rim" in the ETRTO standards, are included in the normal rim. In the description herein, the normal internal pressure represents an internal pressure that is specified according to the standards with which the tire 12 complies. The "maximum air pressure" in the JATMA standards, the "maximum value" recited in the "TIRE LOAD LIMITS AT VARIOUS COLD INFLATION PRESSURES" in the TRA standards, and the "inflation pressure" in the ETRTO standards, are included in the normal internal pressure.

A tire manufacturing method according to a second embodiment includes the steps of:
(1) preparing the first and second sheet pieces 20a and 20b;
(2-1) joining the first and second sheet pieces 20a and 20b to obtain a sheet;
(3-1) placing the sheet on the servicer 4;
(4) winding the sheet on the drum 6;
(5) obtaining a raw cover; and
(6) vulcanizing the raw cover to obtain a tire.

The steps (1), (5), and (6) in this embodiment are the same as the steps (1), (5), and (6) descried above, respectively.

In the first embodiment described above, the first and second sheet pieces 20a and 20b are joined on the servicer 4. In the second embodiment, the manufacturing apparatus further includes a joining base where the sheet pieces 20 are joined together, and the first and second sheet pieces 20a and 20b are placed on the servicer 4 after being joined on the joining base.

A tire manufacturing method according to a third embodiment includes the steps of:
(1) preparing the first and second sheet pieces 20a and 20b;
(2-2) feeding the first sheet piece 20a to the drum 6 while rotating the drum 6 to wind the first sheet piece 20a on the drum 6;
(3-2) placing the front edge of the second sheet piece 20b on the rear edge of the first sheet piece 20a;
(4-2) feeding the second sheet piece 20b to the drum 6 while rotating the drum 6 to wind the second sheet piece 20b on the drum 6;
(5) obtaining a raw cover; and
(6) vulcanizing the raw cover to obtain a tire.

The steps (1), (5), and (6) in this embodiment are the same as the steps (1), (5), and (6) descried above, respectively.

In the first and second embodiments described above, the first and second sheet pieces 20a and 20b are joined to form the sheet 26, and then the sheet 26 is wound on the drum 6. In the third embodiment, the first sheet piece 20a is wound on the drum 6, and the second sheet piece 20b is wound on the drum 6 behind the rear edge of the first sheet piece 20a. Thus, the first and second sheet pieces 20a and 20b are joined on the drum 6. The sheet composed of the first and second sheet pieces 20a and 20b joined together is wound on the drum 6.

### Examples

The following will show the effects of the present invention by means of an example. The present invention should not be construed in a limited manner on the basis of the description of the example

### [Example 1]

The apparatus as shown in FIGS. 1 to 4 was used to produce a tire by the method of the first embodiment. In this method, a primary sheet for tread formation was formed and cut to prepare first and second sheet pieces equal in length. That is, the formed sheet consisted of two divided pieces. This is indicated by the numeral "2" in "Number of divided pieces" in Table 1. The sheet pieces were stored on a tray and carried to the servicer. The sheet pieces were placed on the servicer and joined on the servicer. The length of the formed sheet was 2420 mm. The sheet was wound on the drum to form a tread. The tread was combined with other tire components to form a raw cover, which was vulcanized to obtain a tire.

### [Comparative Example 1]

A primary sheet for tread formation was cut to form a sheet with a length of 2420 mm. That is, the sheet was not divided in pieces. This is indicated by the numeral "1" in "Number of divided pieces" in Table 1. The sheet was stored on a tray and placed on the servicer. The other procedures were performed in the same manner as in Example 1 to obtain a tire.

### [Comparative Example 2]

An uncut primary sheet for tread formation was wound on a reel. The primary sheet was stored on the reel and carried to the drum. The primary sheet was fed from the reel to the drum. The primary sheet was wound on the drum and then cut. The other procedures were performed in the same manner as in Example 1 to produce a tire.

### [Variation in Sheet Thickness]

In Example 1 and Comparative Example 1, the thickness of the sheet on the servicer was measured at 10 points arranged at regular intervals in the length direction. In Comparative Example 2, a 2420-mm-long portion of the primary sheet wound on the reel was randomly selected. The thickness of this portion was measured at 10 points arranged at regular intervals in the length direction. For each of Example and Comparative Examples, the standard deviation of the thickness was calculated. The results are listed in Table 1, where the evaluation index for Comparative Example 1 is defined as 100. The smaller the value is, the smaller the thickness variation is. A smaller value is more preferred.

### [Uniformity]

In each of Example and Comparative Examples, 10 tires were produced. These tires were measured for uniformity according to the uniformity testing method as specified in "JASO C607: 2000". The measurement items are radial force variation (RFV), lateral force variation (LFV), conicity (CON), and balance. The measurement conditions are as follows.
Internal pressure: 200 kPa
Load: 5000 N
Speed: 60 km

The averages of the measured values are listed in Table 1, where the evaluation indices for Comparative Example 1 are defined as 100. A smaller value is more preferred.

### [Table 1]

**Table 1 Evaluation Results**

| | | Comparative Example 1 | Comparative Example 2 | Example 1 |
|---|---|---|---|---|
| Storage means | | Tray | Reel | Tray |
| Number of divided pieces | | 1 | - | 2 |
| Thickness variation | | 100 | 150 | 100 |
| Uniformity | RFV | 100 | 150 | 50 |
| | LFV | 100 | 120 | 70 |
| | CON | 100 | 120 | 50 |
| | Balance | 100 | 150 | 50 |

As shown in Table 1, Example is superior overall to Comparative Examples. The evaluation results demonstrate the superiority of the manufacturing method of the present invention.

### [Disclosed Items]

The following items are disclosures of preferred embodiments.
[Item 1]
   A tire manufacturing method including the steps of:
   (A) preparing first and second sheet pieces made of unvulcanized rubber; and
   (B) winding a long sheet on a drum, the long sheet including the first and second sheet pieces, wherein the second sheet piece has a front edge joined to a rear edge of the first sheet piece.
[Item 2]
   The tire manufacturing method according to item 1, wherein the step (B) includes the steps of:
   (B' 1) joining the front edge of the second sheet piece to the rear edge of the first sheet piece to obtain the long sheet; and
   (B'2) feeding the sheet from a servicer to the drum while rotating the drum to wind the sheet on the drum.
[Item 3]
   The tire manufacturing method according to item 2, wherein the step of obtaining the sheet includes the steps of:
   arranging the first and second sheet pieces on a placement base of the servicer;
   raising a support base to bring the support base into contact with a lower surface of a joint between the first and second sheet pieces;
   pressing a roller against an upper surface of the joint; and
   lowering the support base to move the support base away from the joint.
[Item 4]
   The tire manufacturing method according to item 3, wherein in the step of arranging the first and second sheet pieces, a location of the first or second sheet piece on the placement base of the servicer in a width direction of the first or second sheet piece is fixed by a guide located on the placement base.
[Item 5]
   The tire manufacturing method according to item 4, wherein the location of the first or second sheet piece in the width direction is fixed by a pair of guides which are located on the placement base and spaced from each other in the width direction and whose locations in the width direction are adjustable.
[Item 6]
   The tire manufacturing method according to item 1, wherein the step (B) includes the steps of:
   (B"1) feeding the first sheet piece to the drum while rotating the drum to wind the first sheet piece on the drum;
   (B"2) placing the front edge of the second sheet piece on the rear edge of the first sheet piece; and
   (B"3) feeding the second sheet piece to the drum while rotating the drum to wind the second sheet piece on the drum.
[Item 7]
   The tire manufacturing method according to any one of items 1 to 6, wherein
   the first and second sheet pieces prepared in the step (A) are for tread formation,
   an unvulcanized tread is obtained by the step (B), and
   the tire manufacturing method further includes the steps of:
      (C) after the step (B), combining the unvulcanized tread with other components to obtain a raw cover; and
      (D) heating the raw cover to obtain a tread from the unvulcanized tread.
[Item 8]
   The tire manufacturing method according to item 7, wherein the tread obtained in the step (D) has an outer diameter of 740 mm or more.
[Item 9]
   The tire manufacturing method according to item 7 or 8, wherein the tread obtained in the step (D) has a hardness of 60 or less.
[Item 10]
   The tire manufacturing method according to any one of items 7 to 9, wherein the tread obtained in the step (D) has a thickness of 10 mm or more.
[Item 11]
   A tire manufacturing apparatus including:
   a drum; and
   a servicer that feeds a sheet made of unvulcanized rubber to the drum, wherein
   the servicer includes:
      a placement base on which first and second sheet pieces made of unvulcanized rubber are arranged in a length direction of the first and second sheet pieces;
      guides by which locations of the sheet pieces in a width direction of the sheet pieces are fixed; and
      a pressure bonding mechanism by which the sheet pieces are pressure-bonded at a joint between the sheet pieces.
[Item 12]
   A pneumatic tire including:
   a first tread having an outer surface formed as a tread surface, the first tread extending in a circumferential direction of the pneumatic tire; and
   a second tread having an outer surface formed as a tread surface, the second tread being continuous with the first tread and extending in the circumferential direction, wherein
   the pneumatic tire has an outer diameter of 740 mm or more.
[Item 13]
   The pneumatic tire according to item 12, wherein
   a material of the first tread is a rubber composition, and
   a material of the second tread is a rubber composition identical to the rubber composition of the first tread.
[Item 14]
   The pneumatic tire according to item 12 or 13, wherein both the first and second treads have a hardness of 60 or less.
[Item 15]
   The pneumatic tire according to any one of items 12 to 14, wherein both the first and second treads have a thickness of 10 mm or more.

### Industrial Applicability

The manufacturing method described above is applicable to manufacturing of various types of tires.

### Reference Signs List

- 2: manufacturing apparatus
- 4: servicer
- 6: drum
- 8: placement base
- 10: first guide
- 12: second guide
- 14: support base
- 16: laser
- 18: roller
- 20: sheet piece
- 20a: first sheet piece
- 20b: second sheet piece
- 22: joint
- 24: pressing roller
- 26: sheet
- 30: tire
- 32: tread
- 32a: first tread
- 32b: second tread

## Claims

1. A tire manufacturing method comprising the steps of:
(A) preparing first and second sheet pieces made of unvulcanized rubber; and
(B) winding a long sheet on a drum, the long sheet including the first and second sheet pieces, wherein the second sheet piece has a front edge joined to a rear edge of the first sheet piece.

2. The tire manufacturing method according to claim 1, wherein the step (B) comprises the steps of:
(B' 1) joining the front edge of the second sheet piece to the rear edge of the first sheet piece to obtain the long sheet; and
(B'2) feeding the sheet from a servicer to the drum while rotating the drum to wind the sheet on the drum.

3. The tire manufacturing method according to claim 2, wherein the step of obtaining the sheet comprises the steps of:
arranging the first and second sheet pieces on a placement base of the servicer;
raising a support base to bring the support base into contact with a lower surface of a joint between the first and second sheet pieces;
pressing a roller against an upper surface of the joint; and
lowering the support base to move the support base away from the joint.

4. The tire manufacturing method according to claim 3, wherein in the step of arranging the first and second sheet pieces, a location of the first or second sheet piece on the placement base of the servicer in a width direction of the first or second sheet piece is fixed by a guide located on the placement base.

5. The tire manufacturing method according to claim 4, wherein the location of the first or second sheet piece in the width direction is fixed by a pair of guides which are located on the placement base and spaced from each other in the width direction and whose locations in the width direction are adjustable.

6. The tire manufacturing method according to claim 1, wherein the step (B) comprises the steps of:
(B"1) feeding the first sheet piece to the drum while rotating the drum to wind the first sheet piece on the drum;
(B"2) placing the front edge of the second sheet piece on the rear edge of the first sheet piece; and
(B"3) feeding the second sheet piece to the drum while rotating the drum to wind the second sheet piece on the drum.

7. The tire manufacturing method according to any one of claims 1 to 6, wherein
the first and second sheet pieces prepared in the step (A) are for tread formation,
an unvulcanized tread is obtained by the step (B), and
the tire manufacturing method further comprises the steps of:
(C) after the step (B), combining the unvulcanized tread with other components to obtain a raw cover; and
(D) heating the raw cover to obtain a tread from the unvulcanized tread.

8. The tire manufacturing method according to claim 7, wherein the tread obtained in the step (D) has an outer diameter of 740 mm or more.

9. The tire manufacturing method according to claim 7 or 8, wherein the tread obtained in the step (D) has a hardness of 60 or less.

10. The tire manufacturing method according to any one of claims 7 to 9, wherein the tread obtained in the step (D) has a thickness of 10 mm or more.

11. A tire manufacturing apparatus comprising:
a drum; and
a servicer that feeds a sheet made of unvulcanized rubber to the drum, wherein
the servicer includes:
a placement base on which first and second sheet pieces made of unvulcanized rubber are arranged in a length direction of the first and second sheet pieces;
guides by which locations of the sheet pieces in a width direction of the sheet pieces are fixed; and
a pressure bonding mechanism by which the sheet pieces are pressure-bonded at a joint between the sheet pieces.

12. A pneumatic tire comprising:
a first tread having an outer surface formed as a tread surface, the first tread extending in a circumferential direction of the pneumatic tire; and
a second tread having an outer surface formed as a tread surface, the second tread being continuous with the first tread and extending in the circumferential direction, wherein
the pneumatic tire has an outer diameter of 740 mm or more.

13. The pneumatic tire according to claim 12, wherein
a material of the first tread is a rubber composition, and
a material of the second tread is a rubber composition identical to the rubber composition of the first tread.

14. The pneumatic tire according to claim 12 or 13, wherein both the first and second treads have a hardness of 60 or less.

15. The pneumatic tire according to any one of claims 12 to 14, wherein both the first and second treads have a thickness of 10 mm or more.
